# EUROPEAN PATENT APPLICATION

(11) **EP 4 788 062 A1**
(43) Date of publication of application: **05.08.2026**
(21) Application number: 24870198.9
(22) Date of filing: 16.08.2024
(51) Int. Cl.: H05B 47/115

(54) **METHOD FOR CONTROLLING LAMP BY USING GESTURES, LAMP, AND LIGHTING SYSTEM**

(30) Priority: 25.09.2023 CN 202311244202
(71) Applicant: Suzhou Opple Lighting Co., Ltd., Suzhou, Jiangsu 215211 (CN); Opple Lighting Co., Ltd., Shanghai 201203 (CN)
(72) Inventor: LI, Chongchong, Suzhou, Jiangsu 215211 (CN)
(74) Representative: Winter, Brandl - Partnerschaft mbB
(86) International application number: PCT/CN2024/112582
(87) International publication number: WO 2025/066650

(57) **Abstract**

A method for controlling a lamp by gesture, lamp, and lighting system provided by the present disclosure adopt a distance sensor to recognize various gestures, and control the lamp in terms of switching on/off, scene change, color temperature change, brightness change, and the like according to user gestures.

## Description

The application claims priority to the Chinese patent application No. 202311244202.6, filed on September 25, 2023, the entire disclosure of which is incorporated herein by reference as part of the present disclosure.

### TECHNICAL FIELD

The present disclosure relates to the field of lighting technology, and in particular, to a gesture control method, a lamp, and a lighting system.

### BACKGROUND

With the development of artificial intelligence technology, gesture recognition technology, as an emerging human-computer interaction technology, has been applied in an increasing number of fields. Gesture recognition technology frees users from the constraints of physical input devices, and brings great convenience to users with its unique advantages of being contact-free and intuitive operation.

Gesture recognition technology has also been adopted in lamps. At present, the common sensors used in lamps are ordinary infrared presence sensors which can only detect whether an object is moving. Therefore, lamps can only recognize waving gestures, and then realize only one function selected from the group consisting of switching on/off, switching brightness, and switching color temperature. The single function fails to meet user demands. In control schemes that require recognition of multiple gestures, it is usually necessary to collect images of the user's hand, determine the interaction command by recognizing the gesture in the hand images, and then perform corresponding operations. This requires an image sensor to be integrated into the lamp, and the image processing also requires a relatively complex controller, resulting in high cost.

### SUMMARY

The purpose of the present disclosure is to solve the above problems and provide a simple, low-cost method for controlling a lamp by gesture, a lamp and a lighting system.

To achieve the above objective, the technical solution adopted by the present disclosure is to provide a method for controlling a lamp by gesture, where a distance sensor is adopted to control an operating state of the lamp according to at least one of following control modes: a first control mode, in which when a duration for which the distance sensor detects an object is longer than a first predetermined time and shorter than a second predetermined time, and no object is detected within a third predetermined time, the lamp changes the operating state; a second control mode, in which when after the duration for which the distance sensor detects the object is longer than the first predetermined time and shorter than the second predetermined time, the object is detected again within a preset interval time and a duration is longer than the first predetermined time and shorter than the second predetermined time, the lamp changes the operating state; a third control mode, in which when the duration for which the distance sensor detects the object is longer than a fourth predetermined time and a distance change is smaller than a first preset distance, the lamp changes the operating state; and a fourth control mode, in which when a distance change of the detected object within a fifth preset time is larger than a second preset distance, the lamp changes the operating state.

The present disclosure further provides a lamp which is provided with a distance sensor and a controller, and the controller controls the lamp according to the method for controlling the lamp by gesture as described above.

The present disclosure further provides a lighting system which includes at least one lamp, a distance sensor, and a controller, and the controller controls the lamp according to the method for controlling the lamp by gesture as described above.

### BRIEF DESCRIPTION OF DRAWINGS

Fig. 1 is a schematic structural diagram of a lamp according to an embodiment of the present disclosure.
Fig. 2 is a schematic diagram of a first control mode in a method for controlling a lamp by gesture according to an embodiment of the present disclosure.
Fig. 3 is a schematic diagram of a second control mode in a method for controlling a lamp by gesture according to an embodiment of the present disclosure.
Fig. 4 is a schematic diagram of a third control mode in a method for controlling a lamp by gesture according to an embodiment of the present disclosure.
Fig. 5 is a schematic diagram of a fourth control mode in a method for controlling a lamp by gesture according to an embodiment of the present disclosure.

### DETAILED DESCRIPTION

The method for controlling a lamp by gesture, the lamp and the lighting system provided in the present disclosure will be described in further detail below with reference to the accompanying drawings and specific embodiments.

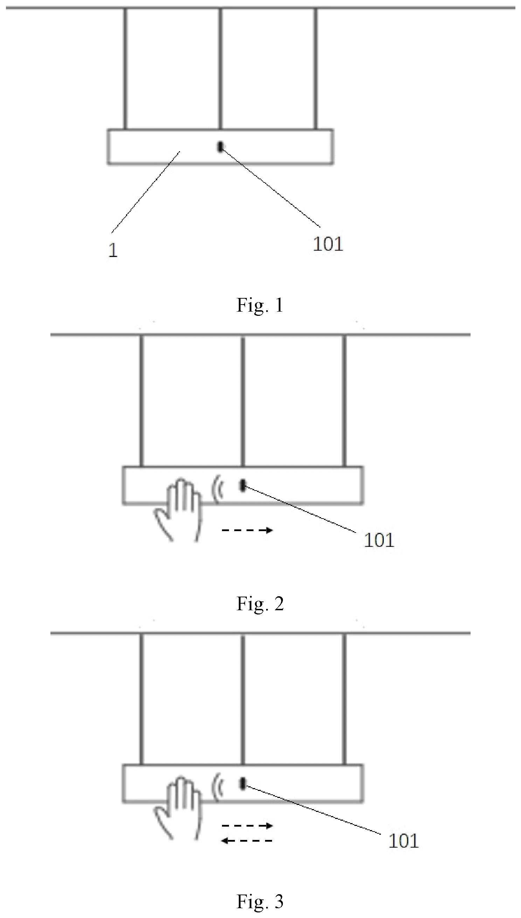

Fig. 1 shows a lamp 1 according to an embodiment of the present disclosure. The lamp 1 is a chandelier, and a distance sensor 101 is arranged on a lamp body of the lamp 1. In other preferred embodiments, the lamp may also be a ceiling lamp, a wall lamp, a floor lamp, a table lamp or the like, which is not limited in the present disclosure. A controller (not shown) is arranged inside the lamp body. The controller receives a detection signal from the distance sensor 101 and controls the lamp according to the received detection signal.

In the present embodiments, four control modes are provided to control the lamp 1, each control mode corresponding to one gesture. When a user performs a corresponding gesture, the lamp 1 changes its operating state, the operating state includes one selected from the group consisting of turning on, turning off, brightness change, color temperature change and color change. Different gestures change different types of operating states. The gestures and the corresponding changed operating states can be flexibly matched. Hereinafter, the gestures corresponding to the four control modes and the implemented functions in the present embodiment are briefly described.

The first control mode is shown in Fig. 2, in which a waving action realizes switching on and switching off of the lamp 1. When a waving action is performed in front of the distance sensor 101, a hand passes in front of the distance sensor 101 along a certain trajectory, and the distance sensor 101 detects an object during a short period from when the hand enters its sensing range to when the hand leaves the sensing range. The duration of one wave passing in front of the distance sensor is about 0.1 to 2 seconds, and the waving action can be identified by recording the time during which the distance sensor 101 detects the object. Therefore, it is set that one wave is determined when the time during which the distance sensor 101 detects the object is longer than a first predetermined time and shorter than a second predetermined time. Meanwhile, to avoid misjudgment and ensure a complete waving action, it is also specified that no object is detected within a third predetermined time, that is, the hand does not return after waving, so as not to be confused with a staying action at a position close to the edge. The first predetermined time is in a range of 0.1 to 0.2 seconds, which is 0.1 second in the present embodiment; the second predetermined time is in a range of 1.5 to 2 seconds, which is 2 seconds in the present embodiment; and the third predetermined time is in a range of 1 to 2 seconds, which is 1 second in the present embodiment. In the present embodiment, when the time during which the distance sensor 101 detects the object meets the above settings, the operating state of the lamp 1 is switched between on and off, the current on state is changed to off, and the current off state is changed to on.

The second control mode is shown in Fig. 2, in which a back-and-forth wave is detected, that is, the hand passes in front of the distance sensor 101 along a certain trajectory and then moves in the opposite direction to pass in front of the distance sensor 101 again. The method for detecting a single wave is similar to that in the first control mode. One wave is recorded when the time during which the distance sensor 101 detects the object is longer than the first predetermined time and shorter than the second predetermined time. The value ranges of the first predetermined time and the second predetermined time are the same as those in the first control mode. In the present embodiment, the specific values are also the same: the first predetermined time is 0.1 second, and the second predetermined time is 2 seconds. Then, when the distance sensor 101 detects the object again within a preset interval time and the duration is longer than the first predetermined time and shorter than the second predetermined time, it is recorded as a second wave. The value range of the preset interval time is 0.3 to 2 seconds. It should be noted that the value of the preset interval time should be shorter than the third predetermined time; otherwise, the lamp will be directly switched on or off according to the first control mode, making it impossible to identify the back-and-forth wave action. In the present embodiment, the interval time is 0.8 second. When the back-and-forth wave action is identified, the lamp 1 changes its operating state, specifically changing the application scene of the lamp 1. To meet various user requirements, the lamp 1 is provided with several preset working scenes, such as a working scene with cool white light and high brightness, a leisure scene with candlelight color, a reception scene with warm white light and certain brightness, etc. Meanwhile, the lamp 1 also provides a function for users to customize scenes, and users can set some scenes according to their preferences. When the back-and-forth wave action is identified, switching between different scenes can be performed.

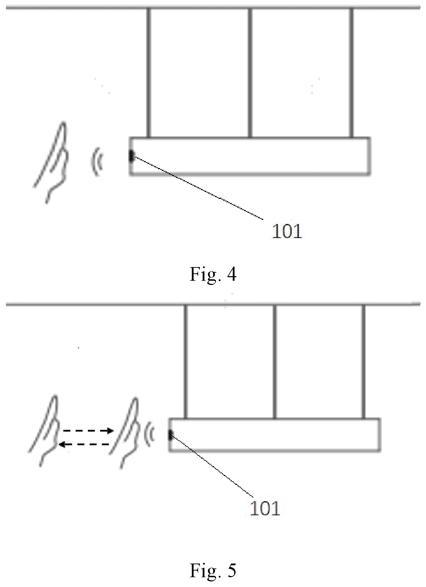

The third control mode is shown in Fig. 4, which identifies a hovering gesture. It is determined that the user has performed the gesture when the time during which the distance sensor 101 detects the object is longer than a fourth predetermined time and the distance change is smaller than a first preset distance. The fourth predetermined time ranges from 1.5 seconds to 2.5 seconds, which is 2 seconds in the present embodiment; the first preset distance ranges from 2 cm to 4 cm, which is 3 cm in the present embodiment. When the above conditions are satisfied, the hovering gesture is identified, the lamp 1 changes its color temperature. Similar to the application scene change, the lamp 1 has several preset color temperatures, which change in sequence.

The fourth control mode is shown in Fig. 5, which identifies a distance-pulling action, that is, the hand moves away from or close to the lamp 1 in front of the distance sensor 101. The action is confirmed when the distance change of the object detected by the distance sensor 101 within a fifth preset time is larger than a second preset distance. The fifth predetermined time ranges from 0.4 seconds to 0.8 seconds, which is 0.5 seconds in the present embodiment; the second preset distance ranges from 3 cm to 10 cm, which is 3 cm in the present embodiment. When the above conditions are satisfied, the distance-pulling gesture is identified, the lamp 1 changes its brightness. The lamp 1 dims when the hand moves from far to near, and brightens when the hand moves from near to far. Of course, in other embodiments, the lamp 1 may brighten when the hand moves from far to near and dim when the hand moves from near to far.

In the present embodiment, the lamp 1 adopts the above four control modes to control switching on/off, scene, color temperature and brightness respectively. In other preferred embodiments, only two or three of the above four control modes may be used for control. Generally speaking, the wave action is easy to identify and is also a commonly used gesture, so it is more suitable for switching on/off operations. Controlling brightness through the distance-pulling gesture is intuitive, and the combination of these two control modes is suitable for conventional lamps. Certainly, the back-and-forth wave and the hovering action may also be used to control the switching on/off of the lamp, which is not limited in the present disclosure. However, generally speaking, the back-and-forth wave and the hovering action may be used as gestures for mode switching, either of them may be used to control either the application scene change or the color temperature change, and when both of the application scene change and the color temperature change need to be controlled at the same time, the gestures can be arbitrarily corresponding to the specific controlled contents.

Although gesture control is non-contact, it is still required that the gesture action should be completed within a certain range in front of the distance sensor 101, which is referred to as an effective sensing distance herein. The effective sensing distance of the distance sensor 101 is not an actual measurable distance, but a set distance, and actions beyond this range will not be identified. This can effectively avoid false triggering of the lamp 1 caused by people walking or other non-control actions, and only actions within the effective sensing distance of the distance sensor 101 can be identified. The effective sensing distance of the distance sensor 101 ranges from 0 to 50 cm, which is 20 cm in the present embodiment.

The above embodiments provide a gesture-controlled lamp, and another preferred embodiment may provide a lighting system. The lighting system may include a plurality of lamps, a distance sensor and a controller. The distance sensor may be arranged on one of the plurality of lamps or on a separate control device outside a lamp. The specific gesture control modes are similar to those in the lamp embodiments, and will not be repeated here. The controller controls each lamp according to gesture instructions sent by the distance sensor.

The above description of the embodiments of the present disclosure is for illustration and description, and is not intended to exhaust or limit the present disclosure to the disclosed specific forms. Obviously, many modifications and variations are possible, which may be obvious to those skilled in the art and should be included within the scope of the present disclosure as defined by the appended claims.

## Claims

1. A method for controlling a lamp by gesture, wherein a distance sensor is adopted to control an operating state of the lamp according to at least one of following control modes:
a first control mode, in which when a duration for which the distance sensor detects an object is longer than a first predetermined time and shorter than a second predetermined time, and no object is detected within a third predetermined time, the lamp changes the operating state;
a second control mode, in which when after the duration for which the distance sensor detects the object is longer than the first predetermined time and shorter than the second predetermined time, the object is detected again within a preset interval time and a duration is longer than the first predetermined time and shorter than the second predetermined time, the lamp changes the operating state;
a third control mode, in which when the duration for which the distance sensor detects the object is longer than a fourth predetermined time and a distance change is smaller than a first preset distance, the lamp changes the operating state; and
a fourth control mode, in which when a distance change of the detected object within a fifth preset time is larger than a second preset distance, the lamp changes the operating state.

2. The method for controlling the lamp by gesture according to claim 1, wherein the operating state of the lamp is one selected from a group consisting of on, off, brightness change, color temperature change, and color variation, when two or more of the control modes are included at a same time, the operating states changed in each of the control modes are different from each other.

3. The method for controlling the lamp by gesture according to claim 2, wherein the first predetermined time is in a range of 0.1~0.2 seconds, the second predetermined time is in a range of 1.5~2 seconds, the third predetermined time is in a range of 1~2 seconds, the preset interval time is in a range of 0.3~2 seconds, the fourth predetermined time is in a range of 1.5~2.5 seconds, the fifth predetermined time is in a range of 0.4~0.8 seconds, the first preset distance is in a range of 2~4 cm, and the second preset distance is in a range of 3~10 cm.

4. The method for controlling the lamp by gesture according to claim 3, wherein in the first control mode, changing the operating state of the lamp is switching between on and off; in the second control mode and the third control mode, changing the operating state of the lamp is switching between different scenes or different color temperatures; in the fourth control mode, changing the operating state of the lamp is brightness adjustment.

5. The method for controlling the lamp by gesture according to claim 4, wherein when a distance between the object and the distance sensor changes from far to near, brightness of the lamp dims; when the distance between the object and the distance sensor changes from near to far, the brightness of the lamp brightens.

6. The method for controlling the lamp by gesture according to claim 4, wherein the method for controlling the lamp by gesture comprises the first control mode and the fourth control mode.

7. The method for controlling the lamp by gesture according to claim 6, wherein the method for controlling the lamp by gesture further comprises one of the second control mode and the third control mode, or both the second control mode and the third control mode.

8. The method for controlling the lamp by gesture according to any one of claims 1 to 7, wherein an effective sensing distance of the distance sensor is in a range of 0~50 cm.

9. A lamp, wherein the lamp is provided with a distance sensor and a controller, and the controller controls the lamp according to the method for controlling the lamp by gesture of any one of claims 1 to 8.

10. A lighting system, wherein the lighting system comprises at least one lamp, a distance sensor, and a controller, and the controller controls the lamp according to the method for controlling the lamp by gesture of any one of claims 1 to 8.
